# EUROPEAN PATENT APPLICATION

(11) **EP 2 538 397 A1**
(43) Date of publication of application: **26.12.2012**
(21) Application number: 10846094.0
(22) Date of filing: 16.02.2010
(51) Int. Cl.: G08G 1/09, B60K 35/00

(54) **VEHICLE CONTROL DEVICE**

(71) Applicant: Toyota Jidosha Kabushiki Kaisha, Toyota-shi, Aichi 471-8571 (JP)
(72) Inventor: OGURI, Haruki, Toyota-shi Aichi 471-8571 (JP); TAGUCHI, Koji, Toyota-shi Aichi 471-8571 (JP)
(74) Representative: Smith, Samuel Leonard
(86) International application number: PCT/JP2010/052283
(87) International publication number: WO 2011/101954

(57) **Abstract**

An apparatus (100) for controlling a vehicle (10) is provided with: a device for specifying a distance to a next traffic light on a driving route; a device for specifying traffic light change timing of the next traffic light; a device for determining a recommended vehicle speed from the specified distance and the specified traffic light change timing; a device for determining accelerator-off timing from the specified distance, the specified traffic light change timing, and a vehicle speed; a device for specifying a driver's driving load; a device for judging whether the specified driving load is high or low; and a device for controlling a notifying device so as to notify each of the accelerator-off timing in cases where it is judged that the specified driving load is high, and the recommended vehicle speed in at least one portion of cases where it is judged that the specified driving load is low, as support information.

## Description

### Technical Field

The present invention relates to a vehicle control apparatus for controlling a vehicle capable of performing green light passage support using, for example, road-to-vehicle communication and vehicle-to-vehicle communication or the like.

### Background Art

This type of apparatus is disclosed in, for example, Patent Document 1. According to the vehicle control apparatus disclosed in the Patent Document 1, a travel distance to a next traffic light is calculated and traffic light change timing information is obtained, based on which a recommended vehicle speed which allows a vehicle to pass through the traffic light in a green light period is calculated. Then, the calculated recommended vehicle speed is displayed on a recommended vehicle speed display unit, by which the number of stops caused by a red light (i.e. uniquely, the number of starts or take-offs) can be reduced, and engine fuel economy can be improved.

Incidentally, there has been also suggested an apparatus for performing driving support which allows not only an own vehicle as a leading vehicle but also a following vehicle to pass through the traffic light.

### Prior Art Document

### Patent Document

Patent Document 1: Japanese Patent Application Laid Open No. 2008-296798
Patent Document 2: Japanese Patent Application Laid Open No. 2009-157618

### Disclosure of Invention

### Subject to be Solved by the Invention

The recommended vehicle speed, in the context of its original spirits or purpose, is neither a vehicle speed under a duty to be observed nor a vehicle speed which guarantees the green light passage at the traffic light, and is merely a vehicle speed simply recommended; however, the display on the recommended vehicle speed display unit mentally influences a driver to no small extent.

For example, if the recommended vehicle speed is displayed, then, from the viewpoint of the driver's psychology, the driver has the illusion that it is, as it were, guaranteed that the driver can pass through the traffic light on a green light (incidentally, the "green light" in the present invention means a light for allowing traffic to proceed) in some cases. Such an illusion could be a remote cause for a type of aimless driving and conceited driving.

On the other hand, a vehicle speed change characteristic from when the recommended vehicle speed is displayed to when the vehicle speed actually arrives at the recommended vehicle speed is infinite in variety, depending on the driver's physical state, mental state, personality, driving ability, etc. It is thus normally found that the traffic light changes to the red light (incidentally, the "red light" in the present invention means a stop light) immediately before the vehicle enters an intersection.

As described above, if the traffic light changes to the red light in a situation in which the driver has his/her intention to pass through the traffic light, a vehicle stop operation to be performed on the driver's side easily gets delayed in comparison with the normal case. The delay of the stop operation could be a factor to hinder smooth operation of a traffic system.

Moreover, some driver may also feel like the recommended vehicle speed is a type of compliance obligation. In this case, the driver at least forces himself/herself to match the vehicle speed with the recommended vehicle speed, and the driver thus may perform a driving operation in an area beyond his/her driving skills without knowing it. The driving operation in the area could be also a factor to hinder the smooth operation of the traffic system.

As described above, the apparatus disclosed in the Patent Document 1 has such a technical problem that the smooth operation of the traffic system can be hindered on a practical operation side due to the lack of attention to the driver's psychology even though the apparatus can support the green light passage at the traffic light theoretically. Moreover, such problems occur in the same manner in an apparatus disclosed in the Patent Document 2.

In view of the aforementioned problems, it is therefore an object of the present invention to provide a vehicle control apparatus capable of preferably supporting the green light passage at the traffic light without hindering the smooth operation of the traffic system.

### Means for Solving the Subject

The above object of the present invention can be achieved by an apparatus for controlling a vehicle comprising a notifying device capable of notifying a driver of support information for supporting the driver, characterized in that said apparatus comprises: a distance specifying device for specifying a distance to a next traffic light on a driving route of the vehicle; a change timing specifying device for specifying traffic light change timing including at least one of start timing and end timing of a green light of the next traffic light; a recommended vehicle speed determining device for determining a recommended vehicle speed for allowing the vehicle to pass through the next traffic light on the green light, from the specified distance and the specified traffic light change timing; an accelerator-off timing determining device for determining accelerator-off timing for allowing the vehicle to pass through the next traffic light on the green light, from the specified distance, the specified traffic light change timing, and a vehicle speed; a load specifying device for specifying the driver's driving load; a load judging device for judging whether the specified driving load is high or low; and a notification control device for controlling the notifying device so as to notify each of the determined accelerator-off timing in cases where it is judged that the specified driving load is high, and the determined recommended vehicle speed in at least one portion of cases where it is judged that the specified driving load is low, as the support information.

The vehicle according to the present invention is configured to obtain various pieces of information such as traffic information and road information, from various communication infrastructures provided on roads, in various structures on the roads, and the like, via various in-vehicle communication apparatuses which enable road-to-vehicle communication, vehicle-to-vehicle communication, or the like, as a preferred form. Alternatively, the vehicle according to the present invention is configured to obtain various information such as a position of the own vehicle and a shape or a slope of the driving route, via various communication apparatuses, such as a car navigation apparatus using a global positioning system (GPS) antenna which can receive a GPS signal from a GPS satellite, a vehicle information and communication system (VICS) antenna which can receive a VICS signal emitted from various beacons, like radio beacons or light beacons, and the like. Incidentally, the various communication apparatuses of this type may be apparatuses for establishing one type of intelligent transport system (ITS).

The vehicle according to the present invention is provided with the notifying device capable of notifying the driver of the support information associated with green light passage support described later and capable of having practical aspects, such as, for example, various display apparatuses like a liquid crystal display apparatus, various indicators, various meters, various light emitting apparatuses, various audio guidance apparatuses, or various tactile information apparatuses. Aspects of the notifying device are not limited in any way, as long as the notifying device enables the driver to perceive the support information via the five senses such as the sense of vision, hearing, or touch. Incidentally, the notifying device can adopt the aspects of the display apparatus provided for the car navigation apparatus described above and various indicators established in a meter hood and a console panel.

The vehicle control apparatus according to the present invention is an apparatus for controlling the vehicle as described above, and can adopt practical aspects such as, for example, one or a plurality of central processing units (CPU), micro processing units (MPU), electronic controlled units (ECU), various processors, or various controllers. Incidentally, as necessary, various storage devices such as a read only memory (ROM), a random access memory (RAM), a buffer memory, or a flash memory may be built in or incidental to the aforementioned units.

According to the vehicle control apparatus of the present invention, the recommended vehicle speed is determined by the recommended vehicle speed determining device from the distance to the next traffic light on the driving route of the own vehicle which is specified by the distance specifying device, and the traffic light change timing including the start timing, the end timing, or both of them, of the green light of the next traffic light which is specified by the change timing specifying device.

The "recommended vehicle speed" according to the present invention is a vehicle speed for allowing the vehicle to pass through the next traffic light on the green light at least without stopping the vehicle. Preferably, moreover, the "recommended vehicle speed" is a vehicle speed as a recommended value determined in consideration of the latest traffic regulations or performances of the vehicle which can be influenced by the vehicle speed, such as drivability and fuel economy.

For example, the recommended vehicle speed is determined in a range of a speed limit or less defined for each driving route. Moreover, the recommended vehicle speed may be determined without extremely interrupting traffic flow at that time point. Moreover, the recommended vehicle speed may be a unique or primary value. However, considering that the next traffic light is maintained in the green light state for a finite period, the recommended vehicle speed may be determined as a certain degree of range. Moreover, the recommended vehicle speed may be a value which can be set to the acceleration side and the deceleration side, due to a relation with the vehicle speed at that time point.

Incidentally, the "next traffic light" is a traffic light considered to be the first light that the vehicle comes across on the driving route. However, the next traffic light according to the present invention is not always limited to it, but includes, in effect, a traffic light which is a passage support target, for example, artificially set by the driver or automatically set on the system side. Moreover, the "timing" according to the present invention may be a time point in a strict meaning, an elapsed time from that time point, or a length of a period defined by a start time point and an end time point.

Incidentally, the term of "specify" associated with each device of the present invention conceptually widely includes to detect, calculate, derive, identify, estimate, select, obtain, or perform similar activities on a specification target or an indirect specification target corresponding to the specification target in a one-to-one, one-to-many, many-to-one, or many-to-many manner, which is already known. The term of "specify" is, in effect, not particularly limited to practical aspects of each specifying device.

On the other hand, according to the vehicle control apparatus of the present invention, the accelerator-off timing is determined by the accelerator-off timing determining device. The "accelerator-off timing" is timing of accelerator-off which allows the vehicle to pass through the next traffic light on the green light at least without stopping the vehicle, in the same manner as the recommended vehicle speed described above. Incidentally, the accelerator-off timing basically corresponds only to the passage support on the deceleration side, excluding in a partial condition in which the vehicle can spontaneously accelerate, such as a falling gradient, as opposed to the recommended vehicle speed described above.

Incidentally, in a configuration in which the vehicle is provided with an internal combustion engine as a power source, a fuel saving measure referred to as so-called fuel cut (hereinafter expressed as "F/C" as occasion demands) is taken in the accelerator-off in some cases. On the other hand, the deceleration by the accelerator-off proceeds almost independently of a situation on the internal combustion engine side. Thus, if the vehicle speed in the green light passage is excessively low, the internal combustion engine possibly has a so-called engine stall. Due to such a situation, generally, the F/C is configured to be performed in a vehicle speed area which is greater than or equal to a lower limit vehicle speed. Considering that the green light passage support aims at suppressing wasteful consumption of fuel by a stop on a red light as one portion of a purpose thereof, the accelerator-off timing is preferably determined such that the vehicle speed when passing through the next traffic light is greater than or equal to the lower limit value.

As described above, in the vehicle control apparatus according to the present invention, two types of aspects of supporting the green light passage of the vehicle are set: passage support by the recommended vehicle speed; and passage support by the accelerator-off timing.

Here, the passage support by the recommended vehicle speed is a support aspect which can be established on both the acceleration side and the deceleration, as described above. Thus, if only a chance pure and simple to allow the passage support is focused on, the passage support by the recommended vehicle speed can be better than the passage support by the accelerator-off. As described above, however, the passage support by the recommended vehicle speed can easily cause the driver's conceit and overconfidence on the practical operation side and is not always a desired support form for the smooth operation of the traffic system.

From the viewpoint as described above, the passage support by the accelerator-off timing is basically the passage support on the deceleration side and is thus, so to speak, the passage support that is better in safety than the passage support by the recommended vehicle speed. Moreover, at the time of vehicle braking, normally, the driver performs a braking operation after performing an accelerator-off operation. Therefore, the passage support by the accelerator-off timing has a so-called stop support side of the vehicle.

However, considering that it is the passage support which is effective only on the deceleration side, the passage support by the accelerator-off timing has no choice but to be inferior to the passage support by the recommended vehicle speed, at least regarding the chance to perform the passage support. In a situation in which the vehicle stops on the red light if the vehicle speed at that time point is maintained, the passage support by the recommended vehicle speed can deal with the green light one cycle before and the green light one cycle after (i.e. next green light). However, the passage support by the accelerator-off timing can basically deal only with the latter. The vehicle control apparatus according to the present invention can accurately select the two types of passage supports having contrary benefits as described above.

In other words, according to the vehicle control apparatus of the present invention, it is judged by the load judging device whether the driving load specified by the load specifying device is high or low. At this time, "high or low" means that at least binary judgment is performed, but obviously, there is no practical problem even if the driver's driving load is judged in a multistep or seamless manner.

Here, according to the vehicle control apparatus of the present invention, the driver is notified of each of the accelerator-off timing in cases where the specified driving load is high, and the recommended vehicle speed in at least one portion of cases where the specified driving load is low, via the notifying device by the notification control device as the support information.

If the driver's driving load is high, the driver's physical or mental margin becomes relatively low. Thus, the passage support by the recommended vehicle speed having a higher load (the number of operations of an accelerator pedal and a brake pedal, a manipulated variable or operation amount, a frequency at which some judgment is required, etc.) than that of the passage support by the accelerator-off timing can cause the aforementioned problems. In this case, the passage support by the accelerator-off timing having a lower load is selected, and it is possible to promote an improvement in the fuel economy by the green light passage without preventing the smooth operation of the traffic system.

On the other hand, if the driver's driving load is low, the driver's physical or mental margin becomes relatively high. Thus, the passage support by the accelerator-off timing having a lower fuel economy improvement effect than that of the passage support by the recommended vehicle speed relatively exposes its weakness. As described above, in cases where there is no need to consider the load, the passage support by the recommended vehicle speed resulting in a higher fuel economy improvement effect is selected, and it is possible to promote the improvement in the fuel economy by the green light passage, more positively. In other words, according to the present invention, it is possible to preferably support the green light passage at the traffic light without preventing the smooth operation of the traffic system.

Incidentally, the notification control device selects the passage support by the recommended vehicle speed in at least one portion of the cases where the driving load is low. In other words, the passage support by the recommended vehicle speed is not always unconditionally selected or performed if the driving load is low. This takes into account the extent of an influence (the aforementioned conceit and overconfidence, etc.) on the driver's psychology by the notification of the recommended vehicle speed, and the resultant disadvantage brought to an operation state of the traffic system. In other words, in the present invention, the passage support by the recommended vehicle speed is performed under sufficient restrictions which do not prevent the smooth operation of the traffic system. There are no reasonable circumstances that the fuel economy of one vehicle is prioritized over the smooth operation of the traffic system as the public interest.

Incidentally, the passage support by the accelerator-off timing is basically the passage support on the deceleration side, and thus, in some cases, there is no option (i.e. no candidate of the accelerator-off timing) depending on the distance to the next traffic light, the traffic light change timing, the vehicle speed, the shape and slope of the driving route, etc. In such cases, for example, the notification control device may do nothing, or may take such a measure as notifying information indicative of impossible passage support as the support information. Alternatively, as described above, the meaning of the support may be changed from the passage support to the stop support. In other words, so to speak, the alternative passage support by the recommended vehicle speed is not allowed even in such cases in principle.

In one aspect of the vehicle control apparatus of the present invention, said load specifying device quantitatively specifies the driving load, and said load judging device judges whether the specified driving load is high or low by comparing the specified driving load with a reference value.

According to this aspect, the driver's driving load is specified quantitatively, i.e. as a type of numerical index. Thus, the load judging device can judge whether the driver's driving load is high or low, accurately and simply, on the basis of comparison with various reference numerals, which are determined to accurately judge and obtain the driver's driving load, for example, on an experimental, experiential, theoretical, or simulation basis or the like in advance.

In another aspect of the vehicle control apparatus of the present invention, said load specifying device specifies, as the driving load, at least one of the vehicle speed, presence or absence of a vehicle ahead located ahead of the vehicle on the driving route, a distance between the vehicle and the vehicle ahead, a distance between the vehicle and the next traffic light, and a shape of the driving route.

According to this aspect, the driver's driving load is specified as at least one of the vehicle speed, the presence or absence of the vehicle ahead, the following distance to the vehicle ahead, the distance to the next traffic light, and the shape of the driving route. Here, the high or low vehicle speed corresponds to the high or low driving load, the presence or absence of the vehicle ahead corresponds to the high or low driving load, the long or short following distance corresponds to the high or low driving load, the long or short distance to the next traffic light corresponds to the low or high driving load, and the complicated or less complicated driving route shape (e.g. the quantity of nodes, etc.) corresponds to the high or low driving load, all of which are practically effective values. Therefore, according to this aspect, it is possible to accurately judge the driver's driving load.

In another aspect of the vehicle control apparatus of the present invention, said notification control device controls the notifying device the determined accelerator-off timing is notified as the support information if a deviation between the determined recommended vehicle speed and the vehicle speed is greater than or equal to a reference value in cases where it is judged that the driving load is low.

The driver's driving load at that time pint does not necessarily correspond to the driver's physical and mental strain caused when the driver matches the vehicle speed with the recommended vehicle speed. For example, for the driver having extremely low driving skills, the driving operation for matching the vehicle speed with the recommended vehicle speed can be a heavy physical and mental strain if the vehicle speed at the current time point is significantly different from the recommended vehicle speed. If the passage support by the recommended vehicle speed is performed in such a case, for example, the traffic light possibly changes to the red light before the vehicle enters the intersection, even though the green light passage is originally possible, because following or tracking the recommended vehicle speed moves to a relatively delayed side.

On the other hand, the driver does not understand his/her driving skills in most cases and is controlled by the intention of passing through the next traffic light on the green light when he/she is notified of the recommended vehicle speed in most cases. Thus, timing at which the driver responds to the traffic light which changes to the red light tends to be delayed in comparison with the normal case, and the required unintended driving operation may prevent the smooth operation of the traffic system against the spirit or purpose of the present invention.

According to this aspect, if the deviation between the recommended vehicle speed and the vehicle speed at that time point is greater than or equal to the reference value, the passage support by the accelerator-off timing is selected. The reference value may be a fixed value determined such that the driver can perform the following or tracking operation with time to spare or with his/her composure on an experimental, experiential, theoretical, or simulation basis or the like in advance. Alternatively, the reference value may be a value variably determined in accordance with the driver's driving skills, personality, past performance, or the like. In any case, there are practically obtained significant benefits, in that the green light passage support can be operated on a safer side.

Incidentally, in this aspect, the vehicle comprises a storage device capable of storing data therein, and said apparatus for controlling the vehicle comprises: a storage control device for controlling the storage device so as to store result information including a result of green light passage support of the vehicle performed by notification of the support information in the past and the deviation corresponding to the result; and a reference value determining device for determining the reference value on the basis of the stored result information.

In this case, the result of the green light passage support in the past (which is, simply, binary information about whether or not to succeed, but which may additionally include detailed information such as whether it succeeds with enough margin, whether it succeeds immediately before the change to the red light, or how long is a delay time from the change to the red light to the arrival at the intersection) is stored in the storage device as the result information including the aforementioned deviation corresponding to the result of interest, and the result information is used for the determination of the reference value associated with the reference value determining device.

Thus, it is possible to accurately perform the change in the support aspect from the passage support by the recommended vehicle speed to the passage support by the accelerator-off timing, in conformity with the individual drivers' circumstances.

In another aspect of the vehicle control apparatus of the present invention, said apparatus further comprises: a vehicle speed change estimating device for estimating a vehicle speed change after a time point at which an accelerator-off operation is performed on the basis of deceleration of the vehicle associated with the accelerator-off operation; and a possibility judging device for judging whether or not the vehicle can pass through the next traffic light on the green light if the vehicle drives in accordance with the estimated vehicle speed change, wherein said notification control device controls the notifying device so as to notify the accelerator-off timing which causes the estimated vehicle speed change as the support information if it is judged that the vehicle can pass through the next traffic light on the green light and if the vehicle drives in accordance with the estimated vehicle speed change in cases where it is judged that the driving load is low.

According to this aspect, in cases where the vehicle drives in accordance with the vehicle speed change estimated by the vehicle speed change estimating device, if it is judged that the vehicle can pass through the next traffic light on the green light (i.e. simply speaking, the passage support by the accelerator-off timing is established), the passage support by the accelerator-off timing is prioritized even if the driving load is low. Thus, it is possible to avoid in advance such a situation as the driver struggles to follow the recommended vehicle speed, due to a road slope, a road shape, road surface friction, or the like, and the passage support standing on the safer side is realized.

Incidentally, in other words, in this aspect, the accelerator-off timing is preferentially selected as the passage support for the driver. In the passage support by the accelerator-off timing, the driver only needs to perform the off operation of the accelerator pedal, and the load to be given to the driver side is extremely low. In other words, the passage support by the accelerator-off timing is a passage support aspect having reasonable circumstances to be prioritized, if the quantity of the frequency of establishing the passage support is ignored.

In another aspect of the vehicle control apparatus of the present invention, said notification control device controls the notifying device so as to notify the determined accelerator-off timing about one traffic light change timing as the support information if the next traffic light has a plurality of types of traffic light change timing.

If the next traffic light has the plurality of types of traffic light change timing such as having an arrow light like a right-turn light, a left-turn light, or the like (incidentally, the expression of the "plurality of types" means a plurality of types, and a single type of traffic light does not correspond to this even if it can change at each time), the passage support itself is not established while the direction of travel of the vehicle is not determined. On the other hand, the traffic light having the arrow light is normally found. Thus, it is also not desirable to stop the passage support itself if the next traffic light is such an arrow light.

According to this aspect, the notification control device controls the notifying device so as to notify the accelerator-off timing about the one traffic light change timing (preferably, a straight-through light), out of the plurality types of traffic light change timing. In other words, in such a situation that the driver's intention is hardly known or confirmed, at least the passage support by the recommended vehicle speed is forbidden. Therefore, on one hand, if the driver has his/her intention to proceed in a selected one direction (e.g. a straight-through direction), the passage support by the notification of the accelerator-off timing succeeds as much as possible. On the other hand, even if the driver has his/her intention to proceed in another direction, there is no disadvantage given to the driver because the notification of the accelerator-off timing functions as the stop support. In any case, the safe operation of the traffic system is ensured.

In another aspect of the vehicle control apparatus of the present invention, said recommended vehicle speed determining device and said accelerator-off timing determining device determine the recommended vehicle speed and the accelerator-off timing, respectively, such that the traffic light changes to the green light a predetermined time before a time point at which the vehicle arrives at the next traffic light.

Even when the driver knows that a series of measurements associated with the green light passage support is put in motion, a psychological burden on the driver is not light if the red light changes to the green light immediately before the entrance to the intersection. In such cases, there can be a situation in which the driver performs an unnecessary braking operation or performs similar actions, even though the vehicle enters the intersection in timing in which the green light passage support succeeds.

According to this aspect, the recommended vehicle speed determining device and the accelerator-off timing determining device determine the recommended vehicle speed and the accelerator-off timing, respectively, such that the next traffic light changes to the green light the predetermined time before the time point at which the vehicle arrives at the next traffic light. This enables the driver to enter the intersection after confirming the change in the light state from the red light to the green light, and this can prevent such a problem as fuel economy deterioration and hindrance of the smooth operation of the traffic system caused by the unnecessary braking operation.

### Brief Description of Drawings

[FIG. 1] FIG. 1 is a block diagram conceptually showing a configuration of a part related to the vehicle control apparatus according to the present invention, in a vehicle in one embodiment.
[FIG. 2] FIGs. 2 are schematic plan views showing a HMI in the vehicle in FIG. 1.
[FIG. 3] FIG. 3 is a view explaining an outline of passage support control in the vehicle in FIG. 1.
[FIG. 4] FIG. 4 is a flowchart showing the passage support control performed by an ECU in the vehicle in FIG. 1.
[FIG. 5] FIG. 5 is a diagram showing a correlation between a vehicle speed and an accelerator-off operation start distance.
[FIG. 6] FIG. 6 is a diagram showing a correlation between the vehicle speed and a braking operation start distance.
[FIG. 7] FIG. 7 is a top view showing a target driving route exemplifying one driving state of the vehicle.

### Mode for Carrying Out the Invention

### <Embodiment of the Invention>

Hereinafter, with reference to the drawings, a preferred embodiment of the present invention is explained.

### <Configuration of Embodiment>

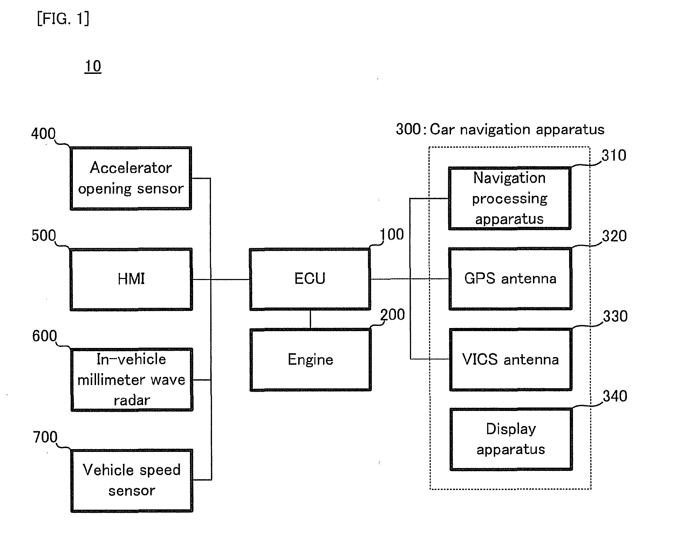

Firstly, with reference to FIG. 1, a configuration of a vehicle 10 in one embodiment of the present invention is explained. FIG. 1 is a block diagram particularly conceptually showing the configuration of a part related to the vehicle control apparatus according to the present invention, in the vehicle 10.

In FIG. 1, the vehicle 10 is provided with an ECU 100, an engine 200, a car navigation apparatus 300, an accelerator opening 400, a human machine interface (HMI) 500, an in-vehicle millimeter wave radar 600, a vehicle speed sensor 700, and a road-to-vehicle communication apparatus 800.

The ECU 100 is provided with a central processing unit (CPU), a read only memory (ROM), a random access memory (RAM) and the like, which are not illustrated. The ECU 100 is an electronic control unit configured to control each element in FIG. 1 and configured to function as one example of the "vehicle control apparatus" of the present invention. The ECU 100 can perform passage support control described later, in accordance with a control program stored in the ROM.

The engine 20 is a gasoline engine as a power source of the vehicle 10. Incidentally, in the present invention, the power source of the vehicle is not particularly limited. In other words, the vehicle according to the present invention may be a vehicle using only an internal combustion engine as the power source, an electric vehicle (EV) using an electric motor or the like as the power source, or a so-called hybrid vehicle (HV) having both characteristics.

Incidentally, the detailed configuration of the engine 200 correlates weakly with the nature of the present invention and is thus omitted herein in order to prevent a complicated explanation. Incidentally, the "internal combustion engine" conceptually includes an engine capable of converting fuel combustion energy into kinetic energy to take it out as power, and a practical aspect thereof is not limited to any manner, such as, for example, fuel types, fuel combustion forms, the number of cylinders, fuel supply aspects, fuel injection aspects, cylinder arrangement, ignition aspects, fuel supply aspects, configurations of a valve operating system, or configurations of an intake/exhaust system.

The car navigation apparatus 300 is an apparatus mounted on the vehicle 10 and configured to provide a driver with various navigation information including information about a position of the vehicle 10, information about a road around the vehicle 10 (a road type, a road width, the number of lanes, a speed limit, a road shape, etc.), traffic light information, information about various facilities located around the vehicle 10, traffic congestion information, environmental information, etc. The car navigation apparatus 300 is provided with a navigation processing apparatus 310, a GPS antenna 320, a VICS antenna 330, and a display apparatus 340.

The navigation processing apparatus 310 is a control unit electrically connected to the ECU 100, controlled by the ECU 100, and configured to control the entire operation of the car navigation apparatus 300. The navigation processing apparatus 310 is configured to analyze data obtained via the GPS antenna 320 and the VICS antenna 330 and to supply necessary data to the ECU 100 in the process of performing the passage support control described later. At the same time, the navigation processing apparatus 310 can display the various navigation information on the display apparatus 340 described later.

The GPS antenna 320 is a communication apparatus configured to receive a GPS signal supplied from a GPS satellite. The GPS signal obtained via the GPS antenna 320 is converted, as occasion demands, by the navigation processing apparatus 310 to position data of the vehicle 10 which can be referred to by the ECU 100.

The VICS antenna 330 is a road-to-vehicle communication apparatus configured to obtain data about VICS information including the road information, the traffic light information, and the traffic congestion information, from various known radio beacons and light beacons which are provided as infrastructures on a road. The data about the VICS information obtained via the VICS antenna 330 is converted, as occasion demands, by the navigation processing apparatus 310 to driving road data of the vehicle 10 which can be referred to by the ECU 100.

Incidentally, further to the traffic light information obtained by the VICS antenna 330, from a traffic light provided on a road, control information of the traffic light is transmitted to the same type of VICS antenna which exists in a communicable range of the beacons (e.g. a range of about 200-300 m in radius) via the radio beacons or light beacons described above with a regular period. In the control information, a lighting cycle of the traffic light is defined, and lighting start timing and lighting end timing of a green light, which is a light for allowing traffic to proceed, are included.

The display apparatus 340 is a liquid crystal display apparatus disposed on a front console panel of the vehicle 10. The display apparatus 340 is configured to display the aforementioned various navigation information as visual information (i.e. image information) for the driver, in accordance with drive control of the navigation processing apparatus 310.

The accelerator opening sensor 400 is a sensor capable of detecting an accelerator opening degree Ta which is a manipulated variable or operation amount of an accelerator pedal (not illustrated) which can be operated by the driver. The accelerator opening sensor 400 is electrically connected to the ECU 100, and the detected accelerator opening degree Ta is referred to by the ECU 100 with a regular period.

The HMI 500 is an interface apparatus associated with an information transfer between the driver and the vehicle 10 and is one example of the "notifying device" of the present invention. More specifically, the HMI 500 is a multi-information indicator (multifunctional information display apparatus) provided with a LED as a light emitting element and is configured to display various support information in the passage support control described later, under the control from the ECU 100 electrically connected thereto.

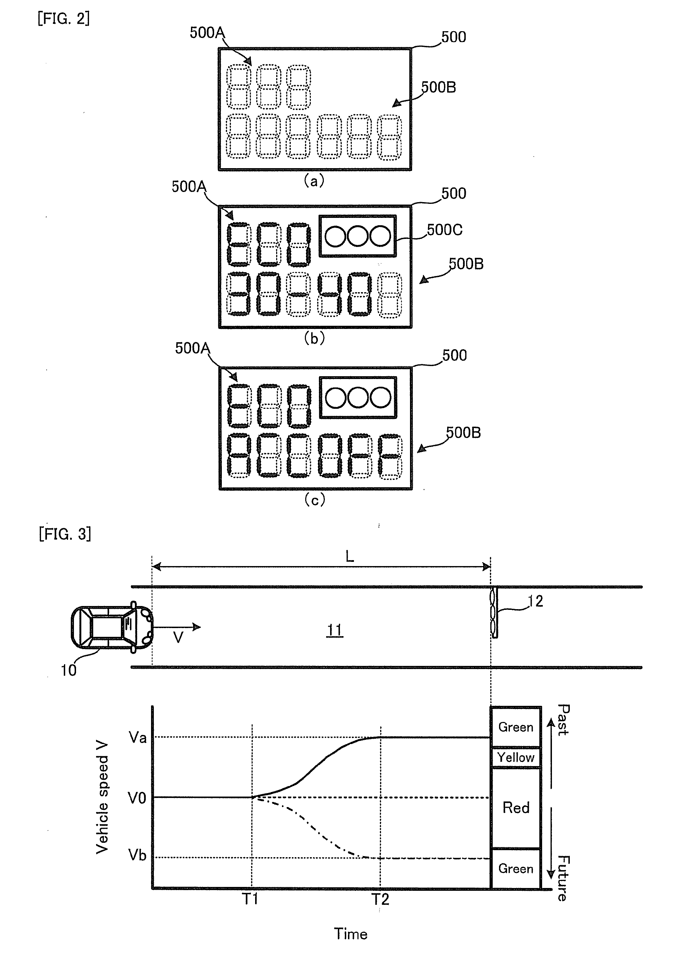

Now, with reference to FIGs. 2, details of the HMI 500 are explained. FIGs. 2 are schematic plan views conceptually showing a configuration of the HMI 500. Incidentally, in FIGs. 2, portions overlapping those of FIG. 1 will carry the same reference numerals, and an explanation thereof is omitted as occasion demands.

In FIG. 2(a), the HMI 500 is provided with a function display unit 500A and an indicating unit 500B.

The function display unit 500A is a display block having a configuration in which three LED units each having seven segments are arranged. The function display unit 500A is electrically connected to the ECU 100 via a not-illustrated drive circuit, and a lighting aspect thereof is controlled by the ECU 100.

The indicating unit 500B is a display block having a configuration in which six LED units each having seven segments are arranged. The indicating unit 500B is electrically connected to the ECU 100 via a not-illustrated drive circuit, and a lighting aspect thereof is controlled by the ECU 100. Incidentally, FIG. 2(a) shows an example in which both the function display unit 500A and the indicating unit 500B are in a light-off state.

Incidentally, the HMI 500 is provided with a traffic light display unit 500C in addition to the aforementioned units; however, the HMI 500 is not displayed because it is in the light-off state in FIG. 2(a).

FIG. 2(b) shows that the traffic light display unit 500C is in a light-on state, in addition to the configuration in FIG. 2(a), in the HMI 500. The traffic light display unit 500C is an indicator composed of a light emitting element and configured to display an image of the traffic light in the light-on state. The traffic light display unit 500C is electrically connected to the ECU 100 via a not-illustrated drive circuit, and a lighting aspect thereof is controlled by the ECU 100.

On one hand, FIG. 2(b) shows that the function display unit 500A is in the light-on state. As shown in the drawing, the function display unit 500A is configured to display information about three alphabets of "ECO" in the light-on state. Incidentally, "ECO" stands for "ECOLOGY" and is lit by the ECU 100 if various passage support measurements are in an effective state in an implementation period of the passage support control described later in which the fuel economy of the engine 200 can be reduced, in order to improve an effect of appealing to the driver.

On one hand, FIG. 2(b) shows that the indicating unit 500B is in the light-on state. As shown in the drawing, the indicating unit 500B is configured to display information about five characters or numbers of "30-40" in the light-on state. Incidentally, "30-40" means that a vehicle speed range of 30 km per hour to 40 km per hour is recommended, is lit by the ECU 100 if passage support by the recommended vehicle speed is selected in the implementation period of the passage support control described later, and is configured to notify the driver of the recommended vehicle speed as one example of the "support information" according to the present invention.

FIG. 2(c) shows that the indicating unit 500B is lit in a lighting aspect different from that in FIG. 2(b). As shown in the drawing, the indicating unit 500B can display information about six alphabets of "ACCOFF" in the light-on state. Incidentally, "ACCOFF" means accelerator-off timing, is lit by the ECU 100 if passage support by the accelerator-off timing is selected in the implementation period of the passage support control described later, and is configured to notify the driver of the accelerator-off timing as one example of the "support information" according to the present invention.

Back in FIG. 1, the in-vehicle millimeter wave radar 600 is a radar apparatus in a millimeter-wave band, built in a front bumper of the vehicle 10. The in-vehicle millimeter wave radar 600 transmits millimeter radio waves to a space ahead of the vehicle 10 with a regular control period. The transmitted millimeter radio waves are reflected on a proper object if there is the object in the space ahead. The in-vehicle millimeter wave radar 600 can receive the reflected waves and accurately detect a distance between the vehicle 10 and the object which exists in the space ahead.

Incidentally, the in-vehicle millimeter wave radar 600 is used for various driver support apparatuses provided for the vehicle 10, e.g. lane keeping assist (LKA) and various pre crush safety systems (PCS). Incidentally, the in-vehicle millimeter wave radar 600 is under the control of the ECU 100, and thus, the ECU 100 can understand a relative distance to the vehicle 10 and the presence or absence of the object in the space ahead as necessary.

The vehicle speed sensor 700 is a sensor configured to detect a vehicle speed V as the speed of the vehicle 10. The vehicle speed sensor 700 is electrically connected to the ECU 100, and the detected vehicle speed V is referred to by the ECU 100 with a regular or irregular period.

### <Operation in Embodiment>

### <Outline of Passage Support Control>

The ECU 100 is configured to perform the passage support control in cooperation with the car navigation apparatus 300 and various public infrastructures. The passage support control is support control for allowing traffic to pass through a next traffic light (which is literally the first traffic light to arrive at, in this case) on the green light in a process in which the vehicle 10 is driving-controlled along a target driving route (i.e. one example of the "driving route" according to the present invention) set via the car navigation apparatus 300.

Here, with reference to FIGs. 2, details of the passage support control are explained. FIGs. 2 is a conceptual view showing the passage support control. Incidentally, in FIGs. 2, portions overlapping those of FIG. 1 will carry the same reference numerals, and an explanation thereof is omitted as occasion demands.

In FIGs. 2, it is assumed that the vehicle 10 is driving on a target driving route 11 at the vehicle speed V from the left side to the right side of the drawing. On the target driving route 11, a next traffic light 12 which is a traffic light through which the vehicle 10 is supposed to pass eventually, is disposed a distance L ahead of the vehicle 10. The next traffic light 12 is one example of the "next traffic light" according to the present invention. The passage support control in the embodiment is vehicle-speed control of the vehicle 10 for allowing the vehicle 10 to pass through the traffic light 12 on the green light.

On the other hand, in the lower portion of FIGs. 2, one time transition of the vehicle speed V of the vehicle 10 is exemplified. At the right end of the time transition, a lighting cycle of the traffic light 12 corresponding to the time transition is exemplified. The lighting cycle has a time axis in its longitudinal direction, and "red", "green", and "yellow" mean light colors.

Here, if the vehicle speed of the vehicle 10 at a current time point is V=V0, in the case of entering an intersection with the traffic light 12 disposed while maintaining the vehicle speed V at V0, the light color of the traffic light 12 is red as shown by a thick dashed line in the drawing. In other words, in this case, the vehicle 10 needs to stop at the intersection. Once the vehicle 10 stops, the fuel economy of the vehicle 10 deteriorates because unnecessary fuel consumption for idling is required. Moreover, even if an idling stop function is incidental to the vehicle 10, excessive fuel injection is required at the time of starting the engine 200 in the stop state, and it is hard to avoid the deterioration of the fuel economy in comparison with the case of passing through the traffic light 12 without a stop.

On the other hand, if the vehicle speed V is changed to V=Va (Va>V0) at a time point T1 and if the vehicle speed V arrives at V=Va at a time point T2 (refer to a solid line shown), then, an entrance time point of the vehicle 10 to enter the intersection becomes earlier than the previous example in which the vehicle speed is maintained. As a result, as shown, the vehicle 10 arrives at the intersection in a period in which the light color of the traffic light 12 is green. As a result, the vehicle 10 can pass through the intersection without a stop. This is one example in which the green light passage support on an acceleration side succeeds.

On the other hand, if the vehicle speed V is changed to V=Vb (Vb<V0) at the time point T1 and if the vehicle speed V arrives at V=Vb at the time point T2 (refer to an alternate long and short dash line shown), then, the entrance time point of the vehicle 10 to enter the intersection becomes slower than the previous example in which the vehicle speed is maintained. As a result, as shown, the vehicle 10 arrives at the intersection in a period in which the light color of the traffic light 12 is green. As a result, the vehicle 10 can pass through the intersection without a stop. This is one example in which the green light passage support on the deceleration side succeeds. Incidentally, in this example, the green light passed through by the passage support on the deceleration side is a green light corresponding to a next cycle of the green light passed through by the passage support on the acceleration side.

The passage support control performed by the ECU 100 is control for enabling the vehicle 10 to pass through the next traffic light on the green light by accurately controlling the vehicle speed V of the vehicle 10, as described above. Moreover, the passage support control is configured such that the two types of passage support aspects which are the passage support by the recommended vehicle speed and the passage support by the accelerator-off timing are accurately selected and such that the fuel consumption of the engine 200 is saved as much as possible without hindering the smooth operation of the traffic system.

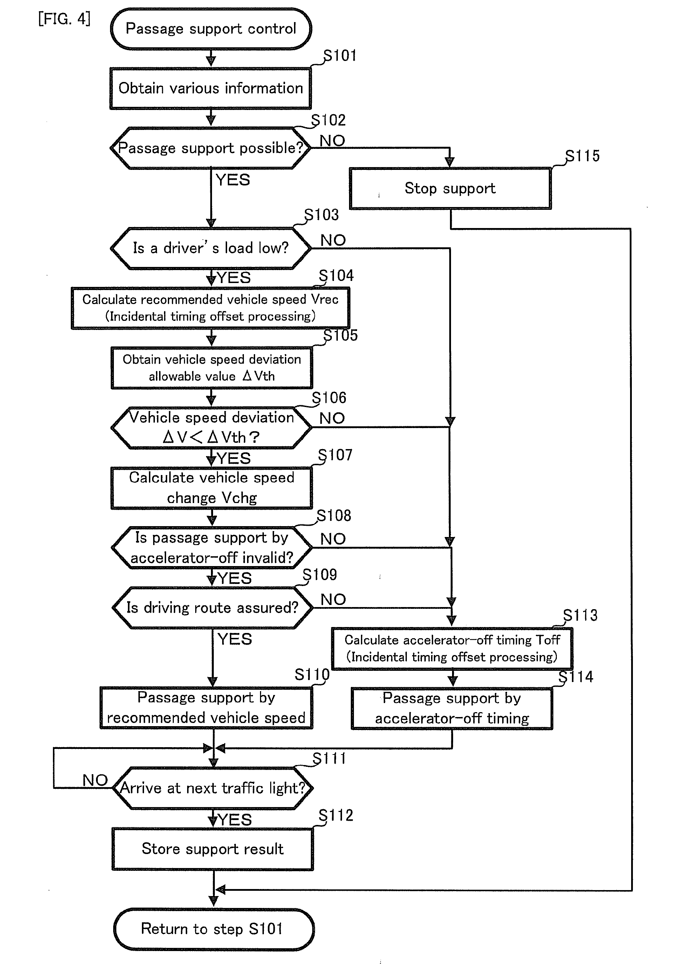

Now, with reference to FIG. 4, details of the passage support control are explained. FIG. 4 is a flowchart showing the passage support control.

In FIG. 4, the ECU 100 obtains various information (step S101). Specifically, the ECU 100 obtains the vehicle speed V of the vehicle 10 via the vehicle speed sensor 800, obtains the relative distance and the presence or absence of the object (simply, a vehicle ahead) in the space ahead of the vehicle 10 via the in-vehicle millimeter wave radar 600, and obtains the position of the vehicle 10, the position of the next traffic light 12, and several cycles of start timing and end timing (incidentally, herein, which are obtained as a relative time value relative to the current time point) of the green light of the next traffic light 12 via the navigation processing apparatus 310.

Then, the ECU 100 judges whether or not the passage support is established on the basis of the obtained various information (step S102). Here, the ECU 100 judges whether or not the passage support is established for each of the aforementioned two types of passage supports.

Firstly, explaining the passage support by the recommended vehicle speed, the ECU 100 calculates the aforementioned distance L from the position of the vehicle 10 and the position of the next traffic light 12, and divides the distance L by each vehicle speed V which belongs to a vehicle speed range which can be adopted by the vehicle 10. As a result, a time required for the vehicle 10 to arrive at the next traffic light 12 is calculated for each of candidate values of the vehicle speed V.

Then, the ECU 100 selects a vehicle speed value that allows the green light passage to be established, from the candidate values of the vehicle speed V, with reference to the plurality of cycles of start timing and end timing about the green light of the next traffic light 12. Moreover, the ECU 100 compares the vehicle speed value in which the green light passage is established with upper/lower speed limits set in advance, and selects a vehicle speed value which can be the recommended vehicle speed.

Incidentally, the upper/lower speed limits are limit values allowed by the vehicle 10 at that time point; namely, the upper speed limit is a legal speed limit of the target driving route 11 and the lower speed limit is an appropriate value determined so as not to interrupt traffic flow. If a recommended vehicle value Vrec can be set through the processing, it is judged that the passage support by the recommended vehicle speed is established.

On the other hand, explaining the passage support by the accelerator-off timing, the ECU 100 calculates accelerator-off timing Toff in which the green light passage at the next traffic light 12 is established, on the basis of the distance L to the next traffic light 12 and the start timing and the end timing about the green light of the next traffic light 12, under the assumption that the vehicle speed V is maintained at that time point. If there is such accelerator-off timing Toff, it is judged that the passage support by the accelerator-off timing is established.

Incidentally, the passage support by the recommended vehicle speed Vrec has a milder forming condition for the passage support that that of the passage support by the accelerator-off timing Toff. This is because the passage support by the recommended vehicle Vreq can be performed both on the side of accelerating the vehicle 10 and on the side of decelerating the vehicle 10. At this time, the passage support on the deceleration side is established for the accelerator-off timing Toff, and a vehicle speed change by the accelerator-off timing cannot be traced by the recommended vehicle speed Vreq. Thus, basically, if the passage support by the recommended vehicle speed Vreq is not established, the passage support by the accelerator-off timing Toff is not established, either. In other words, if the step S102 branches to "YES" side, the passage support is established either due to both the recommended vehicle speed Vreq and the accelerator-off timing Toff, or due to only the recommended vehicle speed Vreq.

If the passage support is established (the step S102: YES), the ECU 100 judges whether or not the driver's driving load is low (step S103). Here, in the embodiment, the driver's driving load is judged by the following four types of indexes; namely, (1) the vehicle speed; (2) the relative distance to the vehicle ahead; (3) the distance L to the next traffic light 12; and (4) road alignments.

In the case of (1), the vehicle speed V is compared with a reference vehicle speed Vth, and if the vehicle speed V is less than the reference vehicle speed Vth, it is judged that the driving load is low.

In the case of (2), the relative distance: to the vehicle ahead is compared with a threshold value, and if the relative distance is infinite (∞) (i.e. there is no vehicle ahead) or if the relative distance is greater than or equal to the threshold value, it is judged that the driving load is low.

In the case of (3), the distance L to the next traffic light 12 is compared with a reference value Lth, and if the distance L is greater than or equal to the reference value Lth, then, it is judged that the driving load is low.

In the case of (4), the road alignments to the intersection with the next traffic light 12 disposed, the number of other intersections having no traffic lights, and the like, which are obtained from the car navigation apparatus 300, are comprehensively judged. In other words, if the road alignments are complicated, it is judged that the driver's driving load is high because skills required for the driver are high. Moreover, if there are many other intersections, it is judged that the driver's driving load is high because the driver needs to visually confirm safety or perform similar actions.

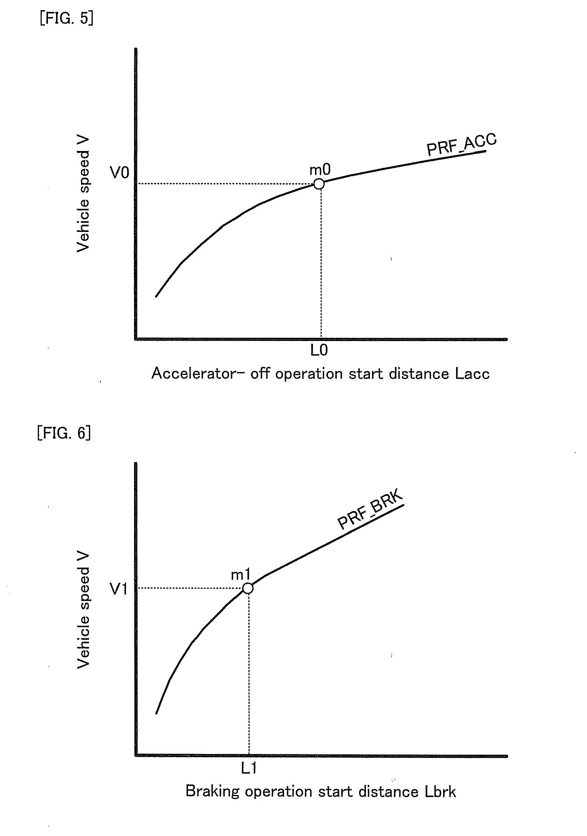

Now, with reference to FIG. 5, the reference value Lth associated with the distance L to the next traffic light 12 is further described. FIG. 5 is a diagram showing a correlation between the vehicle speed V and an accelerator-off operation start distance Lacc.

In FIG. 5, the vehicle speed V is located on the vertical axis, and the accelerator-off operation start distance Lacc is located on the horizontal axis. Here, the accelerator-off operation start distance Lacc is set as a value of the distance L at which the driver voluntarily performs an accelerator-off operation (i.e. it can be judged that a braking operation subsequently occurs, highly likely), experimentally in advance. In other words, as shown by PRF_ACC in the drawing, in cases where the vehicle 10 is driving at the vehicle speed V0, if the distance L to the next traffic light 12 becomes less than or equal to L0, the voluntary accelerator-off operation is started, highly likely. If the voluntary accelerator-off operation is started, it is judged that the driver's load is already high. Incidentally, such judgment may be also performed by using a sensor value of the accelerator opening sensor 400; however, it is hard to judge the load before the voluntary accelerator-off operation, and thus, desirably, the relation exemplified in FIG. 5 is used.

Back in FIG. 4, if the driver's driving load is high (the step S103: NO), the ECU 100 moves the processing into a step S 113 and selects the passage support by the accelerator-off timing Toff. Incidentally, the step S 113 is described later.

If the driver's driving load is low (the step S103: YES), the ECU 100 calculates the recommended vehicle speed Vreq (step S104). The reference value of the recommended vehicle speed Vreq is already obtained in the step S102, but in the step S103, the recommended vehicle speed Vreq is further corrected by timing offset processing.

The timing offset processing is correction processing for changing the light color of the next traffic light 12 to green, a predetermined time before the vehicle 10 enters the intersection with the next traffic light 12 disposed. The predetermined time is variable depending on the recommended vehicle speed and becomes longer as the recommended vehicle speed becomes higher. In other words, the predetermined time is a time long enough for the driver to visually fully confirm the change in the light color. The timing offset processing prevents the driver from having worry such as "although the vehicle is driving at the recommended vehicle speed, I wonder if the light color changes to green", and prevents a redundant driving operation on the driver's side.

Now, with reference to FIG. 6, a concept of the predetermined time is explained. FIG. 6 is a diagram showing a correlation between the vehicle speed V and a braking operation start distance Lbrk.

In FIG. 6, the vehicle speed V is located on the vertical axis, and the braking operation start distance Lbrk is located on the horizontal axis. Here, the braking operation start distance Lbrk is set as a value of the distance L at which the driver voluntarily performs the braking operation, experimentally in advance. In other words, as shown by PRF_BRK in the drawing, in cases where the vehicle 10 is driving at the vehicle speed V1, if the distance L to the next traffic light 12 becomes less than or equal to L1, the driver feels some kind of risk and starts to perform the voluntary braking operation, highly likely. The aforementioned predetermined time namely means a time which does not allow such a voluntary braking operation to be performed. Incidentally, if a steady vehicle speed is determined, a time concept and a distance concept can have a unique relation. In other words, the predetermined time may be replaced by the value of the distance L.

Back in FIG. 4, if the recommended vehicle speed Vreq is calculated, the ECU 100 obtains a vehicle speed deviation allowable value ΔVth, (step S105). Here, the vehicle speed deviation allowable value is an allowable value of a vehicle speed deviation ΔV, which is a deviation between the vehicle speed V and the recommended vehicle speed Vreq, and is stored in a predetermined storage apparatus (e.g. a rewritable non-volatile memory, etc.) in an updatable manner by the ECU 100 in advance. Explaining a concept of the vehicle speed deviation allowable value ΔVth, if the vehicle speed deviation ΔV is large, it is foreseen that a load for matching the vehicle speed V with the recommended vehicle speed Vreq becomes high on the driver's side. Thus, even if it is judged in the step S103 that the driver's driving load is low in advance, it is judged that the passage support by the recommended vehicle speed is to be withheld from the viewpoint of more certainly realizing the passage support. Moreover, if the vehicle speed deviation ΔV becomes large, an individual difference in the vehicle speed change becomes large due to individual skills of drivers, physical/mental states at that time point, personalities, etc. Thus, a situation in which the passage support ends up failing occurs, relatively highly likely.

Thus, the ECU 100 stores result information in which the value of the vehicle speed deviation ΔV is associated with a result of the passage support at that time (whether or not the passage support succeeds) in the storage apparatus, and sets the value of the vehicle speed deviation ΔV in which the success probability of the passage support in the past is greater than or equal to a certain value, as the vehicle speed deviation threshold value (the vehicle speed deviation allowable value?) ΔVth.

If the vehicle speed deviation allowable value ΔVth is obtained, the ECU 100 judges whether or not the vehicle speed deviation ΔV is less than the vehicle speed deviation allowable value ΔVth (step S106). If the vehicle speed deviation ΔV is greater than or equal to the vehicle speed deviation allowable value ΔVth (the step S106: NO), the ECU 100 moves the processing into the step S113 and forbids the passage support by the recommended vehicle speed.

If the vehicle speed deviation ΔV is less than the vehicle speed deviation allowable value ΔVth (the step S106: YES), the ECU 100 obtains a vehicle speed change Vchg (step S107). The vehicle speed change Vcgh is a time transition of the vehicle speed V to the intersection with the next traffic light 12 disposed, if the accelerator-off operation is performed and is calculated on the basis of the vehicle speed V, the distance L to the next traffic light 12, and the deceleration in the accelerator-off.

Here, the deceleration in the accelerator-off is influenced mainly by a road surface slope, shape, road surface friction, or the like of the target driving route 11. In particular, the road surface slope has a strong influence. Thus, the ECU 100 calculates the deceleration in the accelerator-off by deceleration operation processing set in advance, with reference to the road surface slope of the target driving route 11 obtained via the car navigation apparatus 300. Incidentally, if the vehicle speed and the road surface slope are determined, the deceleration of the vehicle 10 can be defined almost uniquely, and various known operation methods can be applied. If the deceleration of the vehicle 10 is determined, the vehicle speed change Vchg can be obtained.

If the vehicle speed change Vchg is calculated, the ECU 100 judges whether or not the passage support by the accelerator-off operation is invalid (step S108). Cases where the passage support by the accelerator-off operation is invalid namely means cases where the vehicle speed V is less than a lower speed limit in the accelerator-off or similar cases. The lower speed limit in the accelerator-off is namely a threshold value for defining execution conditions of F/C of the engine 200 and is a speed to start the engine 200 in a speed area of less than the threshold value.

If the passage support at the calculated vehicle speed change Vcgh is not invalid (the step S108: NO), the ECU 100 moves the processing into the step S113 and performs the passage support by the accelerator-off timing.

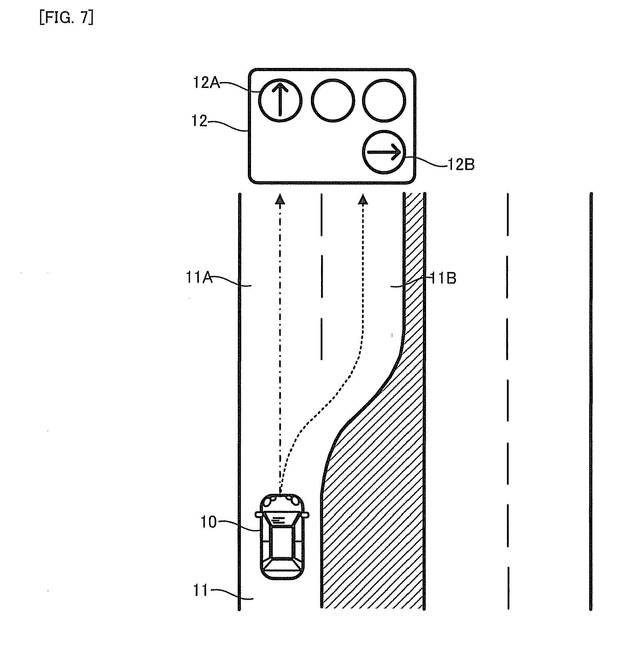

On the other hand, if the passage support at the calculated vehicle speed change Vcgh is invalid (the step S109: YES), the ECU 100 judges whether or not the target driving route 11 of the vehicle 10 is uniformly assured (step S109). Now, with reference to FIG. 7, an explanation is given to cases where there are a plurality of target driving routes 11. FIG. 7 is a top view showing the target driving route exemplifying one driving state of the vehicle 10. Incidentally, in FIG. 7, portions overlapping those of FIG.2 will carry the same reference numerals, and an explanation thereof is omitted as occasion demands.

In FIG. 7, the target driving route 11 branches into a straight-through lane 11A and a right-turn lane 11B in the direction of travel of the vehicle 10. Moreover, in response to that, the next traffic light 12 is provided with a straight-through green light arrow 12A and a right-turn green light arrow 12B, as the green light.

In this case, there are two types of target driving routes which can be taken by the vehicle 10: the straight-through lane 11A and the right-turn lane 11B. Moreover, in this case, as long as the driver's intention is not clearly shown, it is hard to establish the passage support. That is because the straight-through green light arrow 12A corresponding to the straight-through lane 11A and the right-turn green light arrow 12B corresponding to the right-turn lane 11B less likely change to the green light at the same time. Moreover, it is because the green light arrows 12A and 12B more likely have mutually different periods for maintaining a green light state (i.e. different signal cycles).

Back in FIG. 4, if the target driving route 11 is not uniformly assured (the step S109: NO), the ECU 100 moves the processing into the step S113 and performs the passage support by the accelerator-off timing. Incidentally, at this stage, it is already assured that the passage support by the accelerator-off is invalid in the step S108, and thus, the meaning of the step S 113 in this case is close to stop support.

If the target driving route 11 is uniformly assured (the step S109: YES), the ECU 100 performs the passage support by the recommended vehicle speed Vreq (step S 110).

On the other hand, if the processing is moved into the step S 113 and the passage support by the accelerator-off timing Toff is selected, the ECU 100 calculates the accelerator-off timing Toff. Here, in the step S 113, as in the step S104, the timing offset processing is performed. The meaning of the timing offset processing is the same as what is already mentioned and is processing for eliminating a redundant braking operation by the driver and for realizing the smooth vehicle operation. Incidentally, further to that, the timing offset processing advances the accelerator off timing Toff slightly (i.e. by a value corresponding to the braking operation start processing (distance?) Lbrk described above). The passage support by the accelerator-off timing is the passage support on the deceleration side, and thus, as it starts earlier, the entrance timing of the vehicle 10 to the intersection with the next traffic light 12 disposed becomes delayed.

If the accelerator-off timing Toff is calculated, the ECU 100 performs the passage support by the accelerator-off timing (step S 114). If the passage support by the recommended vehicle speed is selected and performed by the step S110, the display state of the HMI 500 is controlled as shown in FIG. 2(b), and if the passage support by the accelerator-off timing is selected and performed by the step S 114, the display state of the HMI 500 is controlled as shown in FIG. 2(c). Incidentally, at this time, the indicating unit 500B may be lit by a response delay of the driver ahead of schedule from the true accelerator-off timing Toff.

If the passage support is performed by the step S 110 or the step S 114, the ECU judges whether or not the vehicle 10 arrives at the next traffic light 12 (the intersection with the next traffic light 12 disposed) (step S111). If the arrival is not obtained (the step S111: NO), the passage support selected and performed at that time point is continued. If the arrival at the next traffic light 12 is obtained (the step S111: YES), the aforementioned result information about the passage support is stored (only in the case of the passage support by the recommended vehicle speed) (step S 112). If the result information is stored, the processing is returned to the step S101 and a series of processing operations is repeated.

Incidentally, in the step S102, if the passage support is not established (the step S102: NO), then, the ECU 100 changes the passage support to the stop support (step S 115). If the stop support is selected, the processing is returned to the step S101. Incidentally, the stop support means the support of the stop operation of the vehicle 10 by encouraging the driver to perform the accelerator-off operation; however, the stop support has a weak relation with the present invention and details thereof are thus omitted herein.

As explained above, according to the passage support control in the embodiment, the passage support by the recommended vehicle speed and the passage support by the accelerator-off timing are selected and performed, basically depending on the driver's driving load. Thus, it is possible to receive benefits about improved fuel economy resulting from the passage support by the recommended vehicle speed, as much as possible, while avoiding an influence on the traffic system by selecting and performing the passage support by the recommended vehicle speed even in a situation in which the driver's driving load is large.

Moreover, in the embodiment, while realizing the selection of the basic passage support aspect according to the driver's driving load as described above, the passage support by the accelerator-off timing is prioritized over the passage support by the recommended vehicle speed, as consideration to a safer side. Thus, in a situation in which the passage support by the accelerator-off timing is established, the passage support by the accelerator-off timing is selected and performed as much as possible. As a result, it is possible to receive economic benefits by reduced fuel economy by ensuring the smooth operation of the traffic system.

The present invention is not limited to the aforementioned embodiment, but various changes may be made, if desired, without departing from the essence or spirit of the invention which can be read from the claims and the entire specification. A vehicle control apparatus, which involves such changes, is also intended to be within the technical scope of the present invention.

### Industrial Applicability

The vehicle control apparatus according to the present invention can be applied to an apparatus for supporting the green light passage of the vehicle.

### Description of Reference Codes

- 10: vehicle
- 100: ECU
- 200: engine
- 300: car navigation apparatus
- 310: navigation processing apparatus
- 320: GPS antenna
- 330: VICS antenna
- 400: accelerator opening sensor
- 500: HMI
- 600: in-vehicle millimeter wave radar
- 700: vehicle speed sensor

## Claims

1. An apparatus for controlling a vehicle comprising a notifying device capable of notifying a driver of support information for supporting the driver, **characterized in that** said apparatus comprises:
a distance specifying device for specifying a distance to a next traffic light on a driving route of the vehicle;
a change timing specifying device for specifying traffic light change timing including at least one of start timing and end timing of a green light of the next traffic light;
a recommended vehicle speed determining device for determining a recommended vehicle speed for allowing the vehicle to pass through the next traffic light on the green light, from the specified distance and the specified traffic light change timing;
an accelerator-off timing determining device for determining accelerator-off timing for allowing the vehicle to pass through the next traffic light on the green light, from the specified distance, the specified traffic light change timing, and a vehicle speed;
a load specifying device for specifying the driver's driving load;
a load judging device for judging whether the specified driving load is high or low; and
a notification control device for controlling the notifying device so as to notify each of the determined accelerator-off timing in cases where it is judged that the specified driving load is high, and the determined recommended vehicle speed in at least one portion of cases where it is judged that the specified driving load is low, as the support information.

2. The apparatus for controlling the vehicle according to claim 1, **characterized in that**
said load specifying device quantitatively specifies the driving load, and
said load judging device judges whether the specified driving load is high or low by comparing the specified driving load with a reference value.

3. The apparatus for controlling the vehicle according to claim 1, **characterized in that**
said load specifying device specifies, as the driving load, at least one of the vehicle speed, presence or absence of a vehicle ahead located ahead of the vehicle on the driving route, a distance between the vehicle and the vehicle ahead, a distance between the vehicle and the next traffic light, and a shape of the driving route.

4. The apparatus for controlling the vehicle according to claim 1, **characterized in that** said notification control device controls the notifying device the determined accelerator-off timing is notified as the support information if a deviation between the determined recommended vehicle speed and the vehicle speed is greater than or equal to a reference value in cases where it is judged that the driving load is low.

5. The apparatus for controlling the vehicle according to claim 4, **characterized in that**
the vehicle comprises a storage device capable of storing data therein, and
said apparatus for controlling the vehicle comprises:
a storage control device for controlling the storage device so as to store result information including a result of green light passage support of the vehicle performed by notification of the support information in the past and the deviation corresponding to the result; and
a reference value determining device for determining the reference value on the basis of the stored result information.

6. The apparatus for controlling the vehicle according to claim 1, **characterized in that** said apparatus further comprises:
a vehicle speed change estimating device for estimating a vehicle speed change after a time point at which an accelerator-off operation is performed on the basis of deceleration of the vehicle associated with the accelerator-off operation; and
a possibility judging device for judging whether or not the vehicle can pass through the next traffic light on the green light if the vehicle drives in accordance with the estimated vehicle speed change, wherein
said notification control device controls the notifying device so as to notify the accelerator-off timing which causes the estimated vehicle speed change as the support information if it is judged that the vehicle can pass through the next traffic light on the green light and if the vehicle drives in accordance with the estimated vehicle speed change in cases where it is judged that the driving load is low.

7. The apparatus for controlling the vehicle according to claim 1, **characterized in that** said notification control device controls the notifying device so as to notify the determined accelerator-off timing about one traffic light change timing as the support information if the next traffic light has a plurality of types of traffic light change timing.

8. The apparatus for controlling the vehicle according to claim 1, **characterized in that** said recommended vehicle speed determining device and said accelerator-off timing determining device determine the recommended vehicle speed and the accelerator-off timing, respectively, such that the traffic light changes to the green light a predetermined time before a time point at which the vehicle arrives at the next traffic light.
